# EUROPEAN PATENT APPLICATION

(11) **EP 1 780 702 A1**
(43) Date of publication of application: **02.05.2007**
(21) Application number: 06122745.0
(22) Date of filing: 23.10.2006
(51) Int. Cl.: G09G 3/36

(54) **Liquid crystal display and method of driving the same**

(30) Priority: 26.10.2005 KR 20050101489
(71) Applicant: Samsung Electronics Co., Ltd., Suwon-si 442-742 Gyeonggi-Do (KR)
(72) Inventor: Kang, Ki-hyung, Paldal-gu Suwon-si Gyeonggi-do (KR)
(74) Representative: Robinson, Ian Michael

(57) **Abstract**

A liquid crystal display (LCD) and a method of driving the same are provided. The LCD includes a liquid crystal panel (100) partitioned into a plurality of panel regions (101, 102), each panel region being independently driven and having data lines and gate lines; a backlight unit (110) that is partitioned into a plurality of backlight regions (111, 112) corresponding to the plurality of panel regions (101, 102) and which irradiates light to the plurality of panel regions (101, 102); and a driver unit (121, 122, 131, 132) driving the plurality of panel regions (101, 102).

## Description

Apparatuses and methods consistent with the present invention relate to a liquid crystal display (LCD) and a method of driving the same, and more particularly, to an LCD with an improved frame rate and brightness and a method of driving the same.

LCDs display images by applying a voltage to each pixel on a liquid crystal panel according to an input image signal and adjusting transmittance of light for each pixel and are used in notebooks, desktop computers, LCD-TVs, and mobile communication terminals. An LCD is a non-emissive flat panel display that needs external light to produce images since it does not emit light. Thus, an LCD requires a backlight unit that is located behind a liquid crystal panel and a driver unit for driving the liquid crystal panel.

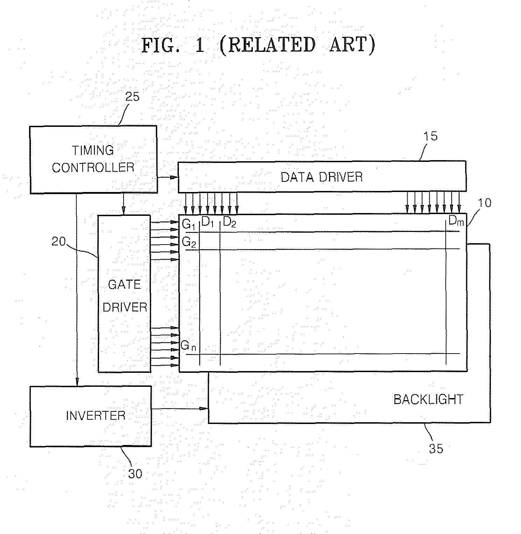

Figure 1 is a schematic diagram of a related LCD. Referring to Figure 1, the related LCD includes a liquid crystal panel 10, a backlight unit 35 supplying light to the liquid crystal panel 10, and a driver unit driving the liquid crystal panel 10. The liquid crystal panel 10 includes mxn liquid crystal pixels arranged in a matrix form, m data lines D₁ through Dₘ and n gate lines G₁ through Gₙ arranged to intersect each other, and thin film transistors (TFTs) disposed at positions where the data lines D₁ through Dₘ and the gate lines G₁ through Gₙ intersect. The driver unit includes a data driver 15 supplying data signals to the data lines D₁ through Dₘ, a gate driver 20 supplying scan signals to the gate lines G₁ through Gₙ, a timing controller 25 controlling the data driver 15 and the gate driver 20 using a synchronization signal, and an inverter 30 driving the backlight unit 35.

The TFT formed in each liquid crystal pixel performs a switching operation according to a data signal supplied from a corresponding one of the data lines D₁ through Dₘ in response to a scan signal supplied from a corresponding one of the gate lines G₁ through Gₙ.

The timing controller 25 uses a vertical/horizontal synchronization signal to generate control signals for the gate driver 20 and the data driver 15. The data driver 15 converts digital image signals into analog data signals in response to the control signal received from the timing controller 25 and supplies the analog data signals to the data lines D₁ through Dₘ. The gate driver 20 sequentially supplies scan pulses to the gate lines G₁ through Gₙ in response to the control signal received from the timing controller 25 and selects horizontal lines of the liquid crystal panel to which data signals are supplied. The inverter 30 supplies a driving voltage to the backlight unit 35. The backlight unit 35 generates a beam corresponding to the driving voltage and supplies the beam to the liquid crystal panel 10.

TFTs are the most common type of switching devices used in LCDs, and LCDs using TFTs as switching devices are referred to as TFT-LCDs. Producing a color image in a LCD is accomplished by spatial division in which each pixel represents one of red (R), green (G), and blue (B) or time division in which every pixel sequentially represents R, G, and B colors. When the time division method is used, the LCD includes R, G, and B light sources that are sequentially turned on. More specifically, after all pixels are scanned according to the operation of a gate driver and a data driver, a red light source is turned on and then off. All pixels are scanned again and then a green light source is turned on. The green light source is turned off and all pixels are scanned again before a blue light source is turned on. On the other hand, according to the spatial division method, R, G, and B color filters are disposed in respective regions corresponding to pixel electrodes to realize respective colors. Thus, when an LCD operates at the same frame frequency, the time division method requires a shorter time during which each color light source is turned on than taken using the spatial division method.

Meanwhile, to display a moving image, the response rate and operating speed of liquid crystals must be equal to or greater than the number of frames in the moving images. Further, LCD frame frequency must be increased to realize a high-resolution precise moving image. When the response rate and operating speed of liquid crystals are low, the screen may appear crumpled or scattered because there is insufficient time to arrange the liquid crystals in a liquid crystal panel. Moreover, because the response rate and operating speed of liquid crystals can be increased only by limited degree, it is also difficult to increase frame frequency.

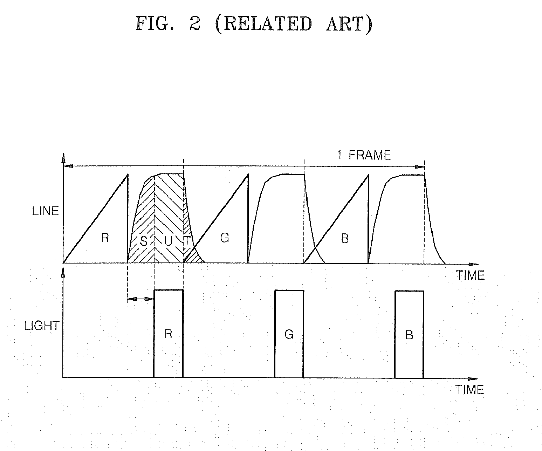

Figure 2 illustrates arranging lines of a liquid crystal panel with respect to time showing a process of aligning liquid crystals according to data supplied from a data driver and corresponding color light being supplied with respect to time.

The time during which liquid crystals are switched from an "off" state to an "on" state according to a data signal is called rising time (τ) and the time during which all liquid crystals are switched from an "on" state to an "off" state is called falling time. The designations S, U, and T denote a rising interval, an interval during which the liquid crystals remain in the on state, and a falling interval, respectively. A backlight unit supplies light during interval U. This process is repeated sequentially for R, G, and B colors. For example, when the total time taken for the liquid crystal panel to display an image frame is 16 msec, data is supplied for less than 2 msec, and all TFTs are turned on for less than 8 msec to align liquid crystals, light must be supplied for less than 6 msec. Thus, as frame frequency decreases, the time during which light is supplied becomes shorter, thus resulting in significant degradation of brightness. Further, as LCD screen size increases, brightness degradation becomes more severe because the time taken for the liquid crystal panel to turn on increases.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Preferred features of the invention will be apparent from the dependent claims, and the description which follows.

An aspect of the present invention provides a liquid crystal display (LCD) for providing a high quality image by increasing frame frequency of a liquid crystal panel while the response rate remains constant and a method of driving the LCD.

An aspect of the present invention also provides an LCD having an increased frame rate and brightness and a method of driving the LCD.

According to an aspect of the present invention, there is provided an LCD including: a liquid crystal panel that is partitioned into a plurality of panel regions, each panel region being independently driven and having data lines and gate lines; a backlight unit that is partitioned into a plurality of backlight regions corresponding to the plurality of panel regions and that irradiate light to the panel regions; and a driver unit that drives the panel regions.

The driver unit includes: a plurality of data drivers, one for each of the panel regions, that supply data signals to the data lines; a plurality of gate drivers, one for each of the panel regions, that supply scan signals to the gate lines; an inverter that drives the backlight unit; and a timing controller that controls the inverter and the data drivers and the gate drivers using vertical and horizontal synchronization signals, respectively. The panel regions may be driven simultaneously.

The backlight unit includes a plurality of color light sources that emit light of different colors and the liquid crystal panel and the backlight unit are sequentially driven for each color. The liquid crystal panel may be vertically partitioned with respect to the data lines. The backlight regions in the backlight unit may be driven simultaneously in response to a vertical synchronization signal received from the timing controller.

Each of the backlight regions is vertically partitioned with respect to the data lines into sub-regions and light is cyclically supplied from light sources in a sub-region of the sub-regions after a scan is completed for a panel region disposed opposite the sub-region.

According to another aspect of the present invention, the LCD may include: a liquid crystal panel vertically partitioned with respect to the data lines into first and second panel regions, each panel region being independently driven and having data lines and gate lines arranged in a two-dimensional array; a backlight unit having first and second backlight regions that are disposed opposite the first and second panel regions, respectively, and that irradiate light to the first and second panel regions; and a driver unit that independently drives the first and second panel regions.

The driver unit includes: a first data driver that supplies data signals to data lines in the first panel region; a first gate driver that supplies scan signals to gate lines in the first panel region; a second data driver that supplies data signals to data lines in the second panel region; and a second gate driver that supplies scan signals to gate lines in the second panel region; an inverter that drives the first and second backlight regions; and a timing controller that controls the first and second data drivers and gate drivers using vertical and horizontal synchronization signals, respectively, and controls the inverter in synchronization with the first and second data drivers.

According to another aspect of the present invention, there is provided a method for driving an LCD including the steps of: partitioning a liquid crystal panel having data lines and gate lines into a plurality of panel regions that can be independently driven; simultaneously driving the panel regions; partitioning a backlight unit into a plurality of backlight regions corresponding to the panel regions; and irradiating light from each of the backlight regions after completing a scan of a corresponding panel region.

The driving the panel regions includes: supplying data signals to data lines in the panel regions using data drivers, one for each of the panel regions; supplying scan signals to gate lines in the panel regions using gate drivers, one for each panel region; and controlling the data drivers and the gate drivers using vertical and horizontal synchronization signals, respectively.

The above and other aspects of the present invention will become more apparent by describing in detail exemplary embodiments thereof with reference to the attached drawings in which:
Figure 1 schematically illustrates a related liquid crystal display (LCD);
Figure 2 illustrates a driving scheme for a related LCD;
Figure 3 is a schematic diagram of an LCD according to an exemplary embodiment of the present invention;
Figures 4A and 4B are timing diagrams respectively showing time taken to form one frame for a related LCD and time taken to display one frame for the LCD of Figure 3;
Figure 5 is a schematic diagram of an LCD according to another exemplary embodiment of the present invention;
Figures 6A-6C are diagrams for explaining a method of driving the LCD of Figure 5 according to an exemplary embodiment of the present invention; and
Figure 7 is a flowchart illustrating a method of driving an LCD according to an exemplary embodiment of the present invention.

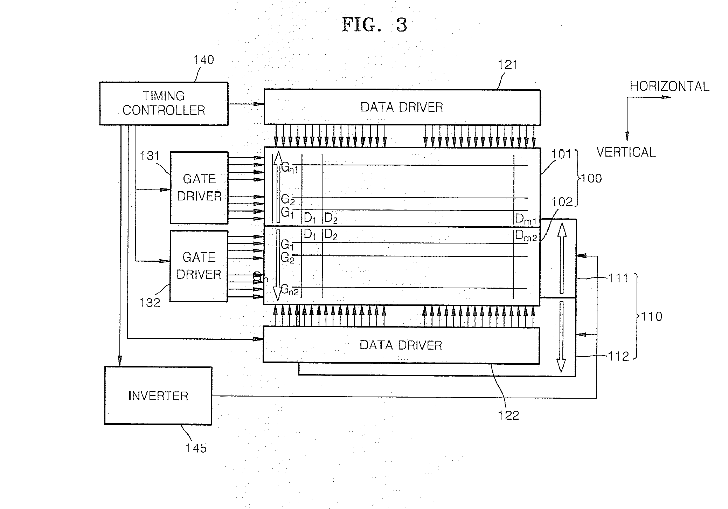

Hereinafter, the present invention will be described in detail by explaining exemplary embodiments of the invention with reference to the attached drawings. Figure 3 is a schematic diagram of an LCD according to an exemplary embodiment of the present invention. Referring to Figure 3, the LCD includes a liquid crystal panel 100 divided into a plurality of panel regions, and a backlight unit 110 supplying light to the panel regions.

The backlight unit 110 includes backlight regions corresponding to the panel regions. The LCD further includes a data driver and a gate driver for each panel region. The data driver and the gate driver respectively supply a data signal and a scan signal to a corresponding panel region.

For example, the liquid crystal panel 100 may include first and second panel regions 101 and 102 and the backlight unit 110 includes first and second backlight regions 111 and 112 corresponding to the first and second panel regions 101 and 102. The LCD further includes first and second data drivers 121 and 122 for supplying data signals to data lines in the first and second panel regions 101 and 102, respectively, and first and second gate drivers 131 and 132 for supplying scan signals to gate lines in the first and second panel regions 101 and 102, respectively.

The first and second data drivers 121 and 122 and the first and second gate drivers 131 and 132 are controlled by a timing controller 140. The timing controller 140 uses a horizontal synchronization signal to control the first and second data drivers 121 and 122. The timing controller 140 also uses a vertical synchronization signal to control the first and second gate drivers 131 and 132. The backlight unit 110 is driven by an inverter 145 that is controlled by the timing controller 140.

The first panel region 101 of the liquid crystal panel 100 includes m1×n1 liquid crystal pixels arranged in a matrix, m1 data lines D₁ through Dₘ₁ and n1 gate lines G₁ through Gₙ₁ arranged to intersect each other, and thin film transistors (TFTs) disposed at positions where the data lines D₁ through Dₘ₁ and the gate lines G₁ through Gₙ₁ intersect. The second panel region 102 includes m2xn2 liquid crystal pixels arranged in a matrix, m2 data lines D₁ through Dₘ₂ and n2 gate lines G₁ through Gₙ₂ arranged to intersect each other, and thin film transistors (TFTs) disposed at positions where the data lines D₁ through Dₘ₂ and the gate lines G₁ through Gₙ₂ intersect.

The liquid crystal panel 100 may be vertically partitioned into a plurality of panel regions with respect to the data lines D₁ through Dₘ₁. According to the current exemplary embodiment of the present invention, the liquid crystal panel 100 is divided into the two panel regions 101 and 102. The backlight unit 110 is divided into the first and second backlight regions 111 and 112 corresponding to the first and second panel regions 101 and 102 and irradiates light onto the corresponding panel regions 101 and 102.

The first and second panel regions 101 and 102 may be simultaneously driven through their corresponding gate drivers and the data drivers. The first panel region 101 is scanned and then irradiated with light emitted from the first backlight region 111. At the same time, the second panel region 102 is scanned and then irradiated with light emitted from the second backlight region 112. The first and second panel regions 101 and 102 can be scanned from top to bottom or from bottom to top.

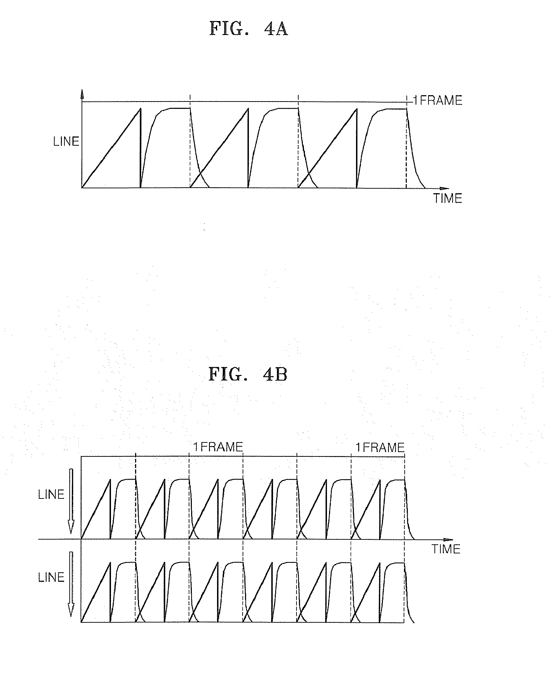

Figure 4A is a timing diagram showing time taken to display one frame when a related liquid crystal panel is constituted of a single region and Figure 4B is a timing diagram showing time taken to display one frame when the liquid crystal panel is divided into two panel regions, as illustrated in Figure 3, with liquid crystals having the same response rate as liquid crystals in the related liquid crystal panel. As is evident from Figures 4A and 4B, the LCD according to the current exemplary embodiment of the present invention has a higher frame rate than that of the conventional LCD. Thus, according to the current exemplary embodiment of the present invention, it is possible to easily improve an LCD frame rate, considering that there is a restriction in increasing the response rate of liquid crystals.

In order to increase brightness as well as frame rate by increasing the time during which light is supplied, each of the first and second panel regions 101 and 102 is further divided into a plurality of sub-regions. The sub-regions are virtual regions that need not be independently driven.

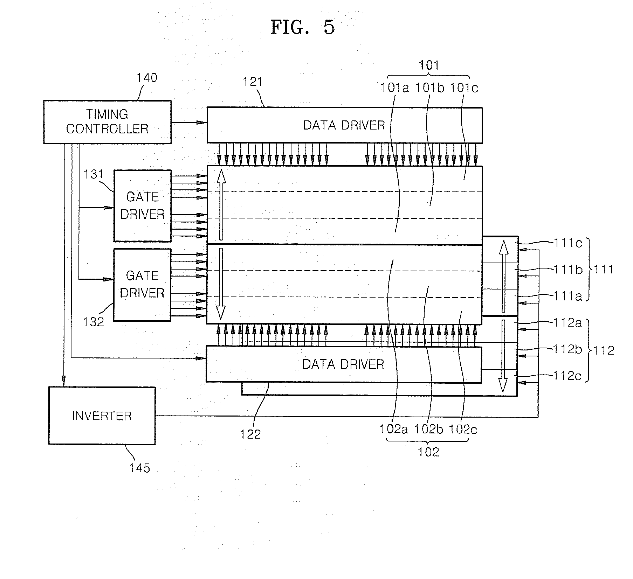

Each of the first and second backlight regions 111 and 112 can be further divided into a plurality of sub-regions corresponding to the sub-regions of the first and second panel regions 101 and 102. The sub-regions of the first and second backlight regions 111 and 112 can be driven independently by the inverter 145. Figure 5 is a schematic diagram of an LCD according to another exemplary embodiment of the present invention. Referring to Figure 5, a first backlight region 111 contains first through third backlight sub-regions 111a through 111c and a second backlight region 112 contains fourth through sixth sub-regions 112a through 112c. A first panel region 101 is partitioned into first through third panel sub-regions 101a through 101c corresponding to the first through third backlight sub-regions 111a through 111c. The second panel region 102 is partitioned into fourth through sixth panel sub-regions 102a through 102c corresponding to the fourth through sixth backlight sub-regions 112a through 112c.

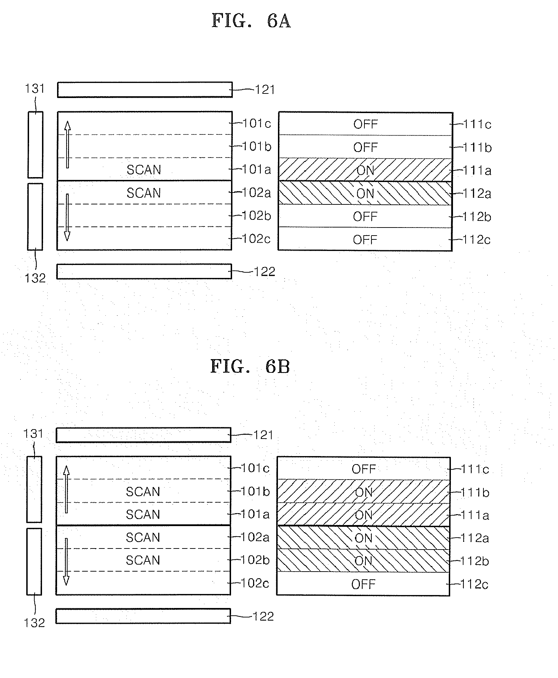

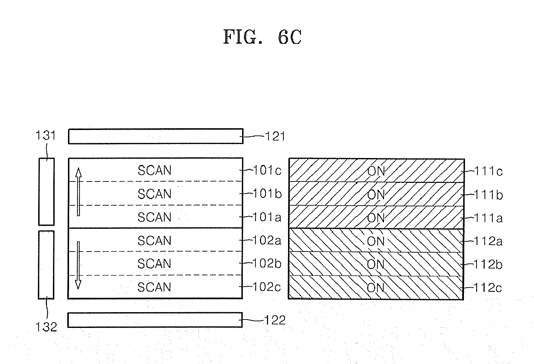

Figures 6A-6C are diagrams for explaining a method of driving the LCD of Figure 5. Referring to Figure 6A, once a scan of the first and fourth sub-regions 101a and 102a is completed, light sources in the first and fourth backlight sub-regions 111a and 112a are turned on to irradiate light on the first and fourth panel sub-regions 101a and 102a while light sources in the remaining panel sub-regions are turned off. Then, once a scan of the second and fifth panel sub-regions 101b and 102b is completed, light sources in the second and fifth backlight sub-regions 111b and 112b are turned on to irradiate light on the second and fifth panel sub-regions 101b and 102b as illustrated in Figure 6B. In this case, light sources in the first, second, fourth, and fifth backlight sub-regions 110a, 110b, 111a, and 111b are turned on while light sources in the third and sixth backlight sub-regions 110c and 111c are turned off. Referring to Figure 6C, after a scan of the third and sixth panel sub-regions 101c and 102c is completed, light sources in the third and sixth panel backlight sub-regions 111c and 112c are turned on to irradiate light on the third and sixth panel sub-regions 101c and 102c. Then, new image data for light of another color is input and light sources in all of the backlight sub-regions 111a through 112c are turned off before the first and third panel sub-regions 101a and 102a are scanned according to the new image data. The above process is cyclically repeated, thereby increasing light supply time and brightness of an LCD.

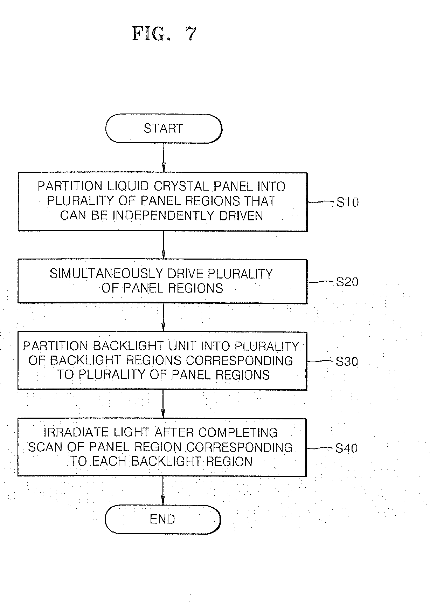

Figure 7 is a flowchart illustrating a method of driving an LCD according to an exemplary embodiment of the present invention. Referring to Figure 7, in operation S10, a liquid crystal panel having data lines and gate lines is vertically partitioned with respect to the data lines into a plurality of panel regions having substantially the same area and the same shape and that can be independently driven.. In operation S20, the plurality of panel regions are driven simultaneously using a data driver and a gate driver for each panel region. In operation S30, a backlight unit for supplying light to the liquid crystal panel is divided into a plurality of backlight regions corresponding to the plurality of panel regions. The plurality of backlight regions may be simultaneously or independently driven. In operation S40, after completing a scan of each panel region, a corresponding backlight region irradiates light to each panel region. Light supplied to each panel region passes through each pixel of a liquid crystal panel with controlled transmittance to produce an image. This process is sequentially performed for each color in the same way. For example, images for R, G, and B color light are sequentially produced and then combined into a single color image.

An LCD according to an exemplary embodiment the present invention has an increased frame rate of a liquid crystal panel while the response rate remains constant by partitioning a liquid crystal panel into panel regions that can be independently driven and simultaneously driving the panel regions, thereby producing high-resolution moving images and large screen images. The number of panel regions can be suitably selected considering the response rate of a liquid crystal panel and a desired frame rate.

Further, the supply time of light can be increased by partitioning each of a plurality of backlight regions into smaller backlight sub-regions and cyclically driving the backlight sub-regions. Each of the backlight sub-regions is independently switched on or off and irradiates light to a corresponding panel region after completing a scan of the panel region. By partitioning each backlight region into smaller sub-regions and increasing the supply time of light, brightness as well as frame rate can be improved.

A method of driving the LCD according to an exemplary embodiment of the present invention can increase a frame rate for a restricted response rate of a liquid crystal panel by partitioning the liquid crystal panel and a backlight unit into a plurality of regions and simultaneously driving the same.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A Liquid Crystal Display (LCD) comprising:
a liquid crystal panel (100) which is partitioned into a plurality of panel regions (101, 102), each panel region being independently driven and having data lines and gate lines;
a backlight unit (110) which is partitioned into a plurality of backlight regions (111, 112) corresponding to the plurality of panel regions (101, 102) which irradiate light to the plurality of panel regions (101, 102); and
a driver unit (121, 122, 131, 132) which drives the plurality of panel regions (101, 102).

2. The LCD of claim 1, wherein the driver unit comprises:
a plurality of data drivers (121, 122), one for each of the plurality of panel regions (101, 102), which supplies data signals to the data lines;
a plurality of gate drivers (131, 132), one for each of the plurality of panel regions (101, 102), which supplies scan signals to the gate lines;
an inverter (145) which drives the backlight unit (110); and
a timing controller (140) which controls the inverter (145) and the data drivers (121, 122) using horizontal synchronization signals and the gate drivers (131, 132) using vertical synchronization signals, respectively.

3. The LCD of claim 1 or 2, wherein the plurality of panel regions (101, 102) are driven simultaneously.

4. The LCD of claim 1, 2 or 3 wherein the backlight unit (110) comprises a plurality of color light sources emitting light of different colors, wherein the liquid crystal panel (100) and the backlight unit (110) are sequentially driven for each color.

5. The LCD of claim 2, wherein the liquid crystal panel (100) is vertically partitioned with respect to the data lines.

6. The LCD of claim 5, wherein the plurality of backlight regions (111, 112) in the backlight unit (110) are driven simultaneously in response to a vertical synchronization signal received from the timing controller (140).

7. The LCD of any preceding claim, wherein each of the backlight regions (111, 112) are vertically partitioned with respect to the data lines into a plurality of sub-regions (111a-c, 112a-c) and light is cyclically supplied from light sources in the plurality of the sub-regions (111a-c, 112a-c) after a scan is completed for the panel regions (101, 102) disposed opposite the respective sub-regions (111a-c, 112a-c).

8. The LCD of any preceding claim, wherein:
the liquid crystal panel (100) is vertically partitioned into first and second panel regions (101, 102) with respect to data lines, each of the first and second panel regions (101, 102) being independently driven and having data lines and gate lines arranged in a two-dimensional array;
the backlight unit (110) comprising first and second backlight regions (111, 112) that are disposed opposite the first and second panel regions (101, 102), respectively, which irradiate light to the first and second panel regions (101, 102) and
the driver unit (121, 122, 131, 132) independently drives the first and second panel regions (101, 102).

9. The LCD of claim 8, wherein the driver unit (121, 122, 131, 132) comprises:
a first data driver (121) which supplies data signals to data lines in the first panel region (101);
a first gate driver (131) which supplies scan signals to gate lines in the first panel region (101);
a second data driver (122) which supplies data signals to data lines in the second panel region (102); and
a second gate driver (132) which supplies scan signals to gate lines in the second panel region (102);
an inverter (145) which drives the first and second backlight regions (111, 112); and
a timing controller (140) which controls the first and second data drivers (121, 122) and gate drivers (131, 132) using vertical and horizontal synchronization signals, respectively, and controls the inverter (145) in synchronization with the first and second data drivers (121, 122).

10. The LCD of claim 8, wherein the first and second panel regions (101, 102) are simultaneously driven.

11. The LCD of claim 8, 9 or 10 wherein the backlight unit (110) comprises a plurality of color light sources which emit light of different colors and wherein the liquid crystal panel (100) and the backlight unit (110) are sequentially driven for each color.

12. The LCD of claim 11, wherein light sources in the first and second backlight regions (111, 112) are driven simultaneously in response to a vertical synchronization signal received from the timing controller (140).

13. The LCD of any of claims 8 to 12, wherein each of the first and second backlight regions (111, 112) are vertically partitioned with respect to the data lines into sub-regions (111a-c, 112a-c) and light is cyclically supplied from light sources in the respective sub-region of the backlight regions (111, 112) after a scan is completed for a panel region (101, 102) disposed opposite the sub-region.

14. A method of driving an LCD, comprising:
partitioning a liquid crystal panel (100) having data lines and gate lines into a plurality of panel regions (101, 102) that can be independently driven;
simultaneously driving the plurality of panel regions (101, 102);
partitioning a backlight unit (110) into a plurality of backlight regions (111, 112) corresponding to the plurality of panel regions (101, 102); and
irradiating light from each of the backlight regions (111, 112) after completing a scan of the corresponding panel regions (101, 102).

15. The method of claim 14, wherein the driving of the panel regions (101, 102) comprises:
supplying data signals to data lines in the panel regions using data drivers (121, 122), one for each of the panel regions (101, 102);
supplying scan signals to gate lines in the panel regions using gate drivers (131, 132), one for each of the panel regions (101, 102); and
controlling the data drivers (121, 122) and the gate drivers (131, 132) using horizontal and vertical synchronization signals, respectively.

16. The method of claim 14 or 15, wherein the backlight unit (110) comprises a plurality of color light sources which emit light of different colors, and wherein the liquid crystal panel (100) and the backlight unit (110) are sequentially driven for each color.

17. The method of claim 14, 15 or 16, wherein light sources in the first and second backlight regions (111, 112) are driven simultaneously in response to a vertical synchronization signal received from the timing controller (140).

18. The method of claim 14, 15, 16 or 17, wherein each of the first and second backlight regions (111, 112) are vertically partitioned into a plurality of sub-regions (111a-c, 112a-c) by the grid lines and light is cyclically supplied from light sources in the respective sub-region of the backlight regions (111, 112) after a scan is completed for a panel region (101, 102) disposed opposite the respective sub-region.
